# FASCICULE DE BREVET EUROPEEN

(11) **EP 2 079 958 B1**
(45) Date de publication et mention de la délivrance du brevet: **17.03.2010**
(21) Numéro de dépôt: 07870274.3
(22) Date de dépôt: 13.11.2007
(51) Int. Cl.: F16L 37/084, F16L 37/12, F16L 37/14

(54) **CONNECTEUR RAPIDE**
SCHNELLVERBINDER
QUICK CONNECTOR

(30) Priorité: 15.11.2006 FR 0609995
(43) Date de publication de la demande: 22.07.2009
(73) Titulaire: Legris SAS, 35000 Rennes (FR)
(72) Inventeur: GAUDIN, Stéphane, 22600 La Motte (FR)
(74) Mandataire: Lavialle, Bruno François Stéphane
(86) Numéro de dépôt international: PCT/FR2007/001862
(87) Numéro de publication internationale: WO 2008/074933

(56) Documents cités:
- EP-A1- 1 582 800
- FR-A1- 2 827 364

## Description

La présente invention concerne un connecteur rapide comportant une partie mâle et une partie femelle qui s'accouplent par simple introduction de l'une dans l'autre.

### ARRIERE PLAN DE L'INVENTION

Dans des circuits de fluide sous pression comportant des connecteurs rapides, il est souhaitable, voire exigé, de mettre en oeuvre des moyens de verrouillage positifs de la connexion. En effet, une connexion mal réalisée est tout d'abord une source de fuites et un risque de désaccouplement dont la conséquence la plus bénigne est de mettre en panne la machine comportant ces circuits de fluide sous pression, et si cette machine est une automobile, d'être une source d'accidents (absence de pression dans les circuits hydrauliques de freinage, fuite de carburant à l'intérieur du compartiment moteur pouvant conduire à un incendie).

Il existe de nombreux dispositifs de verrouillage de l'élément mâle dans l'élément femelle d'un connecteur rapide. Ils fonctionnent sensiblement tous sur le même principe et mettent en oeuvre un moyen général identique consistant en un organe de clavetage qui s'interpose entre une surface radiale de l'embout (gorge ou collerette) et une surface radiale de l'élément femelle (gorge ou collerette également). Cet organe de clavetage peut être introduit manuellement ou peut être maintenu dans sa position de verrouillage par un organe élastique de rappel à l'encontre de l'effet duquel il peut être placé dans un état escamoté (soit déplacé soit déformé) lors de l'introduction de l'embout.

Dans un mode de réalisation particulièrement simple de ce dispositif présenté dans le document FR 2 705 430, le verrou est constitué par une bague montée à coulissement radial dans un logement ménagé dans la pièce femelle du connecteur, entre une première position de repos et de verrouillage où elle est excentrée par rapport à l'axe de l'alésage de la pièce femelle et une seconde position escamotée de déverrouillage où elle est sensiblement coaxiale avec cet alésage.

Un organe élastique constitué par deux languettes en une seule pièce avec la bague, est interposé entre la bague et la pièce femelle et tend à rappeler la bague dans sa première position après le passage de la collerette.

Il apparaît que ce mode de verrouillage n'offre pas assez de garantie quant au bon enfoncement de la pièce mâle dans la pièce femelle. En effet, la pièce mâle peut avoir été enfoncée suffisamment pour que la collerette force la bague à se déplacer à l'encontre des languettes de rappel, mais pas assez pour que la collerette ait dépassé la bague, empêchant ainsi la bague de revenir en position de verrouillage derrière la collerette sous l'effet des languettes élastiques. Cette situation n'est pas visible de façon flagrante pour l'opérateur, qui peut penser que la connexion a été bien réalisée.

On connaît, des documents FR-A-2827364, EP 505 930, EP 0 846 907, FR 2 705 431 ou US 6 145 886, des connecteurs équipés de témoins de verrouillage attestant du bon verrouillage du connecteur, le témoin de verrouillage étant disposé en aval de l'organe de verrouillage pour être manoeuvré par une collerette de la pièce mâle après que cette collerette a franchi l'organe de verrouillage. Dans les connecteurs illustrés dans ces documents, la partie femelle présente des ouvertures spécifiques pour permettre la coopération entre le témoin et la collerette de la partie mâle lors de son introduction, ce qui affaiblit la partie femelle et en complique la fabrication.

Dans le document EP 0 992 729, le témoin est également disposé de façon axialement décalée par rapport à l'organe de verrouillage, mais en amont de l'organe de verrouillage en extrémité de la partie femelle. Le témoin est manoeuvré non pas par la collerette de la partie mâle, mais par un accessoire entraîné par la partie mâle lors de son introduction dans la partie femelle, ce qui rend ce type de connecteur plus complexe.

### RESUME DE L'INVENTION

L'invention vise à remédier à ces inconvénients, et a plus précisément pour objet un connecteur rapide comprenant une pièce femelle avec un alésage étagé dont une première section peut accueillir à étanchéité un embout d'une pièce mâle, et dont une deuxième section de plus grand diamètre peut accueillir une collerette extérieure de la pièces mâle au-delà d'un verrou constitué d'une bague comportant un orifice de passage de diamètre proche de celui de la collerette, la bague étant montée dans un logement ménagé dans la pièce femelle au niveau de la deuxième section pour coulisser radicalement entre une première position excentrée, de verrouillage, et une position escamotée coaxiale avec l'alésage, le verrou comportant un témoin de verrouillage monté à coulissement radial dans la bague entre une première position témoin dans laquelle le témoin de verrouillage n'entrave pas l'orifice de passage, et une seconde position témoin dans laquelle le témoin de verrouillage entrave ledit orifice de passage. Le verrou comprend au moins un organe de blocage du témoin dans sa première position témoin, l'organe de blocage étant mobile entre une position de blocage du témoin et une position escamotée de déblocage et ayant une partie de contact s'étendant en saillie dans la deuxième section vers la première section pour coopérer avec la collerette de manière que la collerette amène l'organe de blocage de sa position de blocage vers sa position de déblocage lorsque la pièce mâle est introduite dans la partie femelle.

Ainsi, le témoin de verrouillage ne peut être amené dans sa deuxième position témoin qu'une fois que la collerette a escamoté l'organe de blocage de sorte que la bague se trouve forcément derrière la collerette. On est donc certain que la connexion est correctement réalisée. L'intégration du témoin selon l'invention se fait sans qu'il soit nécessaire de prévoir des ouvertures spécifiques sur la partie femelle du connecteur, et sans pièce ou accessoire additionnels. L'intégration de l'organe de blocage dans le verrou se fait donc sans agencements spécifiques sur la partie femelle, ce qui en simplifie la fabrication. Le connecteur est donc globalement inchangé, seule la bague étant modifiée pour accueillir le témoin.

Selon un mode de réalisation de l'invention, le témoin de verrouillage en première position témoin n'entrave pas l'orifice de passage de la bague, et le témoin de verrouillage en deuxième position témoin entrave ledit orifice de passage.

Pour vérifier si la connexion entre la pièce mâle et la pièce femelle est correctement réalisée, l'opérateur chargé de réaliser la connexion amène le témoin de verrouillage dans sa deuxième position témoin à l'issue de l'introduction de la pièce mâle dans la pièce femelle. Le témoin de verrouillage dans sa deuxième position témoin s'oppose alors à l'extraction de la pièce mâle.

Selon un mode de réalisation préféré les moyens d'immobilisation sont des moyens de rappel élastique du témoin dans chacune de ses deux positions témoins de part et d'autre d'une position intermédiaire instable.

Lorsque le témoin de verrouillage est dans la première position témoin, il est immobilisé par rapport à la bague par les moyens d'immobilisation. Lorsque la collerette a dépassé la bague, cette dernière se déplace dans la position de repos, et le témoin de verrouillage reste maintenu dans la première position témoin, jusqu'à être manoeuvré manuellement par l'opérateur vers la seconde position témoin où il est à nouveau immobilisé par rapport à la bague. Ces moyens d'immobilisation permettent de garantir que le témoin de verrouillage est fixe par rapport à la bague, et ne peut se déplacer entre les deux positions témoins que par une manoeuvre volontaire de l'opérateur.

Selon un aspect de l'invention, le témoin de verrouillage comporte une partie de manoeuvre en saillie d'une portion extérieure de la pièce femelle lorsque le témoin de verrouillage est dans la première position, et sensiblement escamoté par rapport à la portion extérieure lorsque le témoin de verrouillage est dans la seconde position témoin.

La partie de manoeuvre comporte une ouverture d'introduction d'un outil de manoeuvre et accessible lorsque le témoin de verrouillage est dans la seconde position témoin.

La partie de manoeuvre étant enfoncée dans la pièce femelle, il est difficile de la saisir avec les doigts pour manoeuvrer le témoin de verrouillage. Pour manoeuvrer ce dernier, il faut introduire un outil dans l'ouverture, grâce à un dégagement ménagé dans la pièce femelle permettant l'accès pour l'outil à l'ouverture.

Le témoin de verrouillage comporte également une partie active s'étendant de la partie de manoeuvre vers l'intérieur du logement de la bague, la partie active étant partiellement en regard de parois définissant le logement au moins lorsque le témoin de verrouillage est dans la seconde position témoin.

Selon deux modes de réalisation de l'organe de blocage :
- l'organe de blocage comprend un bras élastique qui est solidaire de la bague et s'étend au moins en partie sous le témoin de verrouillage lorsque l'organe de blocage est en position de blocage et le témoin de verrouillage est dans sa première position témoin de manière à constituer une butée pour le témoin de verrouillage et, de préférence, le bras s'étend selon une direction sensiblement axiale de la bague et possède une portion d'extrémité libre agencée pour être écartée de cet axe par la collerette de la pièce mâle escamotant le bras par rapport au témoin de verrouillage ;
- l'organe de blocage comprend une jambe élastique qui est solidaire du témoin de verrouillage et s'étend en partie en regard d'une surface de butée de la bague lorsque l'organe de blocage est en position de blocage et, de préférence, la jambe s'étend selon une direction parallèle à la direction de coulissement du témoin de verrouillage et a une portion d'extrémité libre agencée pour être enfoncée dans la deuxième section par la collerette et échapper ainsi à la surface de butée de la bague.

### BREVE DESCRIPTION DES DESSINS

L'invention sera mieux comprise à la lumière de la description d'un mode de réalisation de l'invention, en référence aux figures annexées parmi lesquelles :
- la figure 1 est une vue en coupe longitudinale d'un connecteur rapide selon un premier mode de réalisation de l'invention, la pièce mâle n'étant pas encore introduite dans la pièce femelle, la bague étant en position de repos tandis que le témoin de verrouillage est dans la première position témoin,
- la figure 2 est une vue partielle de dessous du connecteur rapide, en coupe selon la ligne II-II de la figure 1, la collerette de la pièce mâle arrivant dans le verrou,
- la figure 3 est une vue analogue à la figure 1, la collerette ayant amené le verrou dans sa position escamotée,
- la figure 4 est une vue analogue à la figure 1, la bague étant en position de repos tandis que le témoin de verrouillage est dans sa première position,
- la figure 5 est une vue partielle de dessous de ce connecteur rapide, en coupe selon la ligne V-V de la figure 4,
- la figure 6 est une vue analogue à la figure 1 après enfoncement de la pièce mâle dans la pièce femelle ; la bague étant en position de repos tandis que le témoin de verrouillage est dans la deuxième position témoin,
- les figures 7 et 8 sont des vues en perspective, de devant et de derrière, du verrou du premier mode de réalisation de l'invention,
- la figure 9 est une vue analogue à la figure 8 d'un verrou d'un connecteur rapide selon un deuxième mode de réalisation,
- la figure 10 est une vue analogue à la figure 1 du connecteur rapide selon le deuxième mode de réalisation,
- la figure 11 est une vue partielle analogue à la figure 10, à la fin de l'enfoncement de la pièce mâle dans la pièce femelle la bague étant en position de repos tandis que le témoin de verrouillage est dans la première position témoin,
- la figure 12 est une vue analogue à la figure 11, après manoeuvre du témoin de verrouillage dans la seconde position témoin, la bague étant dans la position de repos.

### DESCRIPTION DETAILLEE DE L'INVENTION

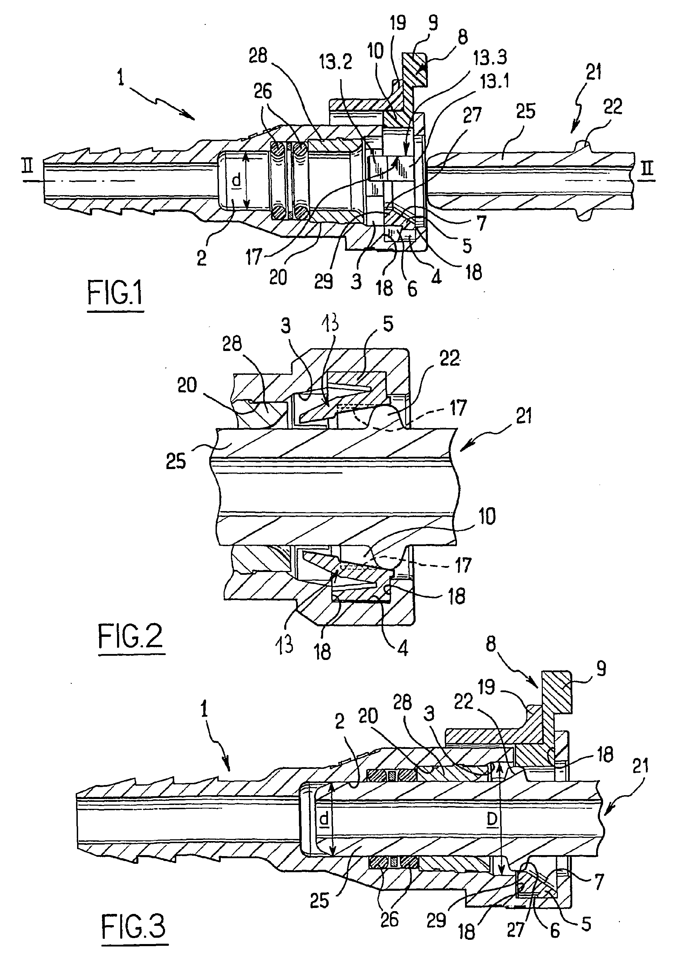

En référence à la figure 1, un connecteur selon l'invention comporte une pièce femelle, généralement désignée en 1, s'étendant selon un axe longitudinal et divisée en plusieurs sections, à savoir une première section 2 et une deuxième section 3 s'étendant de part et d'autre d'une section intermédiaire 20. La section 2 de diamètre d est prévue pour recevoir un embout 25 cylindrique d'une pièce mâle 21 pourvue extérieurement d'une collerette 22. La section intermédiaire 20, de diamètre supérieur à d, reçoit des joints 26 disposés dans la pièce femelle 1 de façon à prendre appui sur l'embout 25 de la pièce mâle 21 en vue d'assurer l'étanchéité de la connexion, et un insert de guidage 28 de l'embout mâle 25 dans la pièce femelle 1. La deuxième section 3 de diamètre D plus important que le diamètre de la section intermédiaire 20 et que celui de la collerette 22, est prévue pour recevoir la collerette 22. La section 3 est pourvue d'un logement 4 délimité par deux parois latérales 18 planes s'étendant en regard l'une de l'autre perpendiculairement à l'axe de la pièce femelle 1 et formant un couloir pour le coulissement radial d'une bague 5 dans le logement 4. Selon l'invention, le logement 4 reçoit également un témoin de verrouillage 8 qui sera détaillé plus loin.

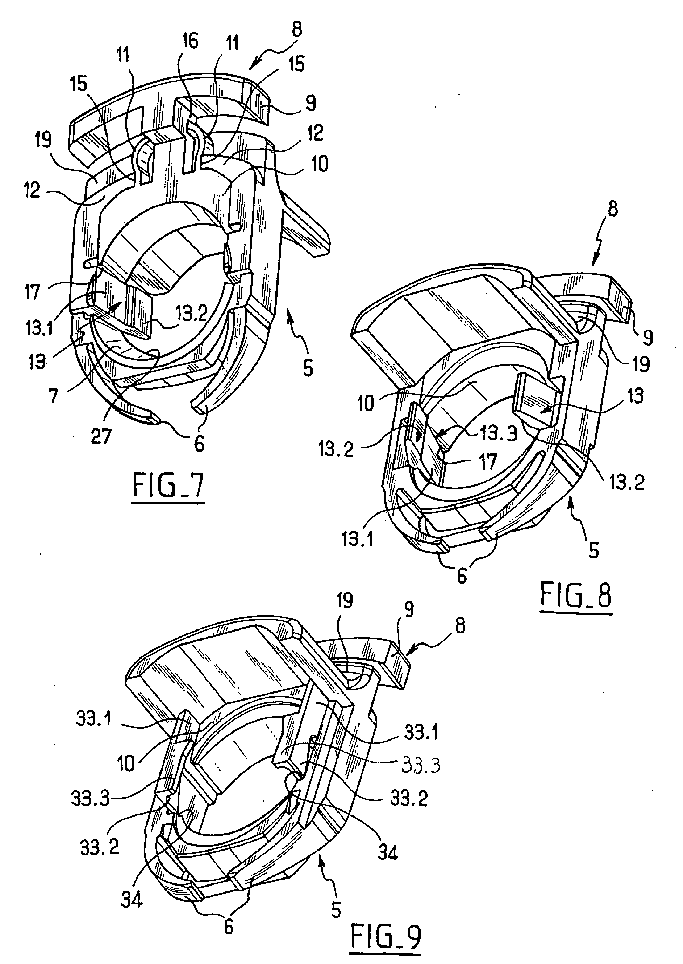

En référence également aux figures 7 et 8, la bague 5 comporte de façon connue en soi des languettes élastiques 6 prenant appui sur le fond du logement 4 et exerçant un effort de rappel dans une position de repos de la bague 5 définie, de façon connue en elle-même, par la coopération de redans du logement 4 avec des redans de la bague 5.

La bague 5 comporte par ailleurs une surface conique 7, s'étendant selon un cône jusqu'à une arête 27 circulaire de diamètre légèrement supérieur au diamètre D de la section 3. L'arête 27 délimite une portion d'un orifice de passage circulaire de la collerette 22 à travers la bague 5.

L'orifice de passage n'est ici matérialisé que par l'arête 27, mais il faut l'imaginer comme un orifice virtuel d'axe parallèle à celui de la pièce femelle 1 et ayant une forme cylindrique d'un diamètre légèrement supérieur à celui de la collerette 22.

Selon l'invention, la pièce femelle 1 est équipée d'un témoin de verrouillage généralement désigné en 8.

Le témoin de verrouillage 8 comprend une partie de manoeuvre 9 en T saillant de la bague 5 et une partie active 10 qui est reçue à coulissement dans la bague 5 et qui est reliée à la partie de manoeuvre 9 au niveau de l'extrémité libre de la jambe du T.

De la partie de manoeuvre 10, partent deux ailes 11 s'étendant le long de la jambe du T de la partie de manoeuvre 9 et ayant une portion intermédiaire incurvée convexe à l'opposé de la jambe du T. Les ailes 11 servent de surface d'appui élastique et de frottement à deux branches 12 de la bague 5. Les ailes 11 délimitent des creux 15, 16 au voisinage de la partie active 10 et au voisinage de la partie de manoeuvre 9 pour respectivement définir une première position témoin dans laquelle la partie active 10 et l'arête 27 définissent une section de passage de diamètre supérieur à la collerette 22 et les extrémités libres des branches 12 sont reçues dans les creux 15 et une deuxième position témoin dans laquelle la partie active 10 et l'arête 27 définissent une section de passage de diamètre voisin de celui de l'embout 25 et les extrémités libres des branches 12 sont reçues dans les creux 16. On comprend que la portion intermédiaire incurvée des ailes 11 forme un point dur définissant une position instable dans le mouvement du témoin de verrouillage 8 entre sa première position témoin et sa deuxième position témoin qui sont elles des positions stables. Dans la première position témoin, la partie de manoeuvre 9 du témoin de verrouillage 8 est en saillie d'une portion externe 19 de la bague. Dans la deuxième position témoin, la partie de manoeuvre 9 affleure la portion externe 19.

La bague 5 comprend un organe de blocage du témoin de verrouillage 8 dans sa première position témoin.

L'organe de blocage comprend deux bras 13 ayant une portion d'extrémité 13.1 solidaire de la bague 5 sous la partie active 10 du témoin de verrouillage 8 et une portion d'extrémité 13.2, libre, s'étendant axialement en saillie de la bague 5 d'un côté de celle-ci opposé au témoin de verrouillage 8, c'est-à-dire ici dans la deuxième section 3. Les bras 13 sont élastiquement déformables entre :
- un état de blocage dans lequel les portions d'extrémité 13.2 des bras 13 sont écartées d'une distance inférieure au diamètre de la collerette 22 et les portions d'extrémité 13.1 des bras 13 ont une surface de butée 13.3 s'étendant sous des portions latérales 17 de la partie active 10 du témoin de verrouillage 8 dans sa première position témoin pour s'opposer à un déplacement du témoin de verrouillage 8 vers sa deuxième position témoin ; et
- un état de déblocage dans laquelle les portions d'extrémité 13.2 sont séparées d'une distance égale au diamètre de la collerette 22 et les surfaces de butée 13.3 sont escamotées par rapport aux portions latérales 17 de la partie active 10 autorisant ainsi un déplacement du témoin de verrouillage 8 vers sa deuxième position témoin.

Dans la position illustrée à la figure 1, l'orifice de passage est désaxé par rapport à l'axe de la pièce femelle 1. La surface conique 7 laisse libre le passage de l'embout 25 de la pièce mâle dans la section 2, mais forme un obstacle pour l'introduction de la collerette 22 dans la section 3 en aval de la bague 5. Le témoin de verrouillage 8 est dans sa première position témoin.

Aux figures 2 et 3, l'embout 25 cylindrique de la pièce mâle 21 a été glissé entre la bague 5 et le témoin de verrouillage 8 pour être introduit dans la section 2 de la pièce femelle, et la collerette 22 a pu être glissée sous la partie active 10 du témoin de verrouillage 8, mais a buté contre la surface conique 7 de la bague 5 (voir figure 2).

En forçant la pièce mâle 21 dans la pièce femelle 1, la bague 5 se déplace radialement sous l'effet de la poussée de la collerette 22 contre la surface conique 7 qui forme une rampe, et à l'encontre de l'effort de rappel exercé par les languettes flexibles 6. La bague 5 se déplace jusqu'à ce que l'arête 27 de la surface conique 7 passe sous la collerette 22, position qui a été illustrée en figure 3. Dans cette position, l'orifice de passage défini par l'arête 27 et la partie active 10 est centré sur l'axe de la pièce femelle 1, le témoin de verrouillage 8 étant retenu dans sa première position témoin par les branches 12 de la bague 5, dont les extrémités libres sont reçues dans les creux 15, de sorte que le témoin de verrouillage 8 n'entrave pas l'orifice de passage. La collerette 22 peut alors passer entre la bague 5 et la partie de témoin de verrouillage 8 en première position témoin.

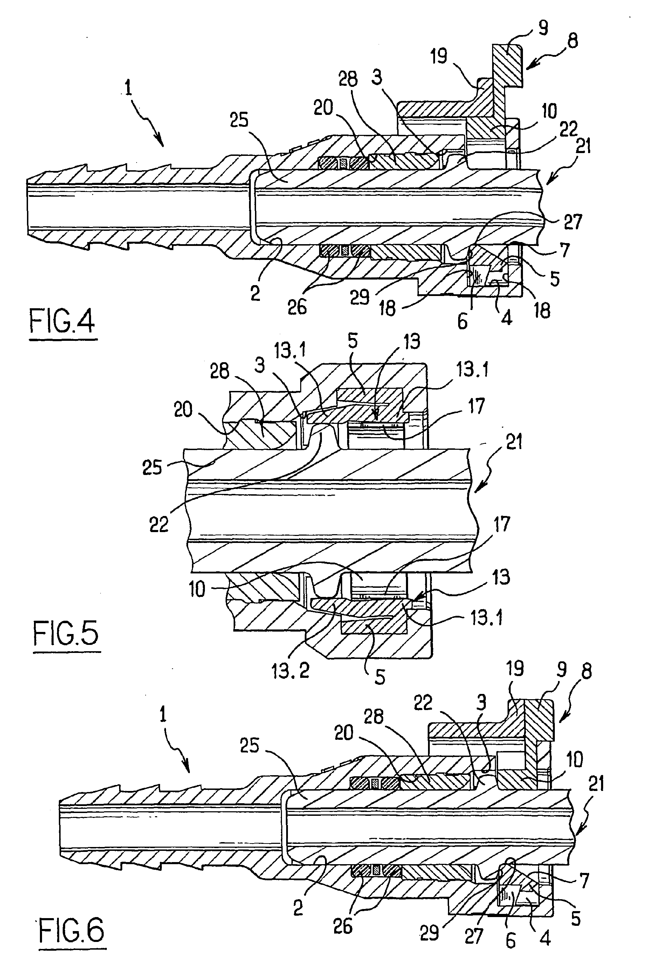

A la figure 4, la collerette 22 a dépassé la bague 5, et celle-ci est revenue dans sa position initiale de repos sous l'effet de l'effort de rappel exercé par les languettes flexibles 6. L'orifice de passage est à nouveau désaxé, le témoin de verrouillage 8 se trouvant toujours dans la première position témoin tandis que la partie de manoeuvre 9 est en saillie franche de la pièce femelle 1.

Dans cette position, la périphérie de la bague 5 est en regard des parois 18 du logement 4, tandis que la bague 5 possède une partie de paroi 29 en regard de la collerette 22. La bague 5 forme un verrou de la liaison entre la pièce mâle 21 et la pièce femelle 1, s'opposant au retrait de la pièce mâle 21.

En outre, comme cela est visible sur la figure 5, la collerette 22 reçue dans la deuxième section 3 au-delà de la bague 5 a écarté les portions d'extrémité 13.2 des bras 13 amenant ces dernières dans leur état de déblocage.

L'opérateur peut alors confirmer la connexion en appuyant sur la partie de manoeuvre 9 du témoin de verrouillage 8, de façon à amener ce dernier dans la position illustrée à la figure 6 qui est la seconde position témoin et dans laquelle les extrémités des branches 12 de la bague 5 sont encliquetées dans les creux 16 définis par les ailes 11 du témoin de verrouillage 8.

Si cette manoeuvre est possible, c'est que la collerette 22 a bien été enfoncée dans la pièce femelle 1 au delà de la bague 5, et que cette dernière a pu revenir dans sa position initiale de repos.

Si la pièce mâle n'a été que partiellement enfoncée dans la pièce femelle 1, sans que la collerette 22 ait atteint la bague 5, et si l'opérateur appuie sur la partie de manoeuvre 9 du témoin de verrouillage 8, l'ensemble bague/témoin va s'enfoncer à l'encontre des languettes flexibles 6 : les portions latérales de la partie active 10 du témoin de verrouillage 8 butent contre les surfaces de butée 13.3 et amènent la bague 5 en position centrée. Lorsque l'opérateur relâche son effort la bague 5 remonte pour revenir dans sa position initiale et la partie de manoeuvre 9 du témoin de verrouillage 8 s'étend en saillie de la portion externe 19 de la bague 5. L'opérateur a ainsi le moyen de constater visuellement que la connexion n'est pas bien réalisée.

S'il arrivait que la collerette 22 dépasse la bague 5 sans que toutefois celle-ci ne reprenne sa position initiale, par exemple à cause de la présence d'un obstacle ou à cause d'une rupture des languettes flexibles 6, l'opérateur décèle alors visuellement qu'avant toute manoeuvre, le témoin de verrouillage 8 est resté dans une position intermédiaire avec toujours la partie de manoeuvre 9 s'étendant en saillie de la portion externe 19. Si l'opérateur ne s'en apercevait pas, il tenterait de pousser le témoin de verrouillage 8 vers la seconde position témoin, mais la partie de manoeuvre 9 resterait en saillie de la portion externe 19 de la bague 5. L'opérateur décèle alors également que la connexion est mal réalisée.

Dans la seconde position témoin, le témoin de verrouillage 8 ne saille quasiment plus de la portion externe 19, à la différence des situations ci-dessus évoquées. L'observation de la position du témoin de verrouillage 8 permet donc au premier coup d'oeil de vérifier si la connexion a été bien réalisée et confirmée par l'opérateur.

Le témoin de verrouillage 8 joue donc le rôle d'un témoin visuel de la bonne connexion.

On aura agencé les creux 15 et 16 définis par les ailes 11 ainsi que les branches 12 de la bague 5 de sorte que l'effort nécessaire pour amener le témoin de verrouillage 8 de la première position témoin vers la deuxième position témoin et pour encliqueter le témoin de verrouillage 8 dans la seconde position témoin soit inférieur à l'effort nécessaire pour faire fléchir les languettes flexibles 6 de la bague 5.

Par ailleurs, le déplacement du témoin de verrouillage 8 dans la seconde position témoin permet de renforcer la résistance au retrait de la pièce mâle 21 de la pièce femelle 1. En effet, ainsi que cela est visible à la figure 6, la partie active 10 du témoin de verrouillage 8 est en regard de la collerette 22 et saille donc dans l'orifice de passage de la bague 5 et la partie active 10 et la base de la partie de manoeuvre 9 sont en regard des parois 18 du logement 4. Le témoin de verrouillage 8 constitue donc un obstacle pour le retrait de la pièce mâle 21 de la pièce femelle 1.

Le témoin de verrouillage 8 joue donc également le rôle d'un verrou, ajoutant ses effets à celui de la bague 5 pour augmenter la résistance à l'arrachement de la pièce mâle 21 hors de la pièce femelle 1.

Pour déconnecter la pièce mâle 21 de la pièce femelle, il faut replacer le témoin de verrouillage dans la première position témoin. Comme la partie de manoeuvre 9 est plaquée contre la partie femelle 1, il n'est pas possible de manoeuvrer le témoin de verrouillage 8 à la main. Il faut introduire l'extrémité d'un outil entre la partie de manoeuvre 9 du témoin de verrouillage 8 et la partie femelle 1, et tirer sur le témoin de verrouillage 8 pour le ramener dans la première position témoin. Il n'est donc pas possible de replacer de manière involontaire le témoin de verrouillage 8 dans la première position témoin après qu'il a été placé dans la seconde position témoin.

Puis il faut appuyer sur la portion externe 19 de la bague 5 pour escamoter la bague jusqu'à une position similaire à celle illustrée à la figure 3. La collerette 22 peut alors passer entre la bague 5 et la partie active 10 du témoin de verrouillage 8.

Dans le deuxième mode de réalisation de l'invention, l'élément femelle 1 et l'élément mâle 21 sont identiques à ceux du premier mode de réalisation, le connecteur rapide selon le deuxième mode de réalisation ne se différenciant de celui du premier mode de réalisation que par la structure de l'organe de blocage.

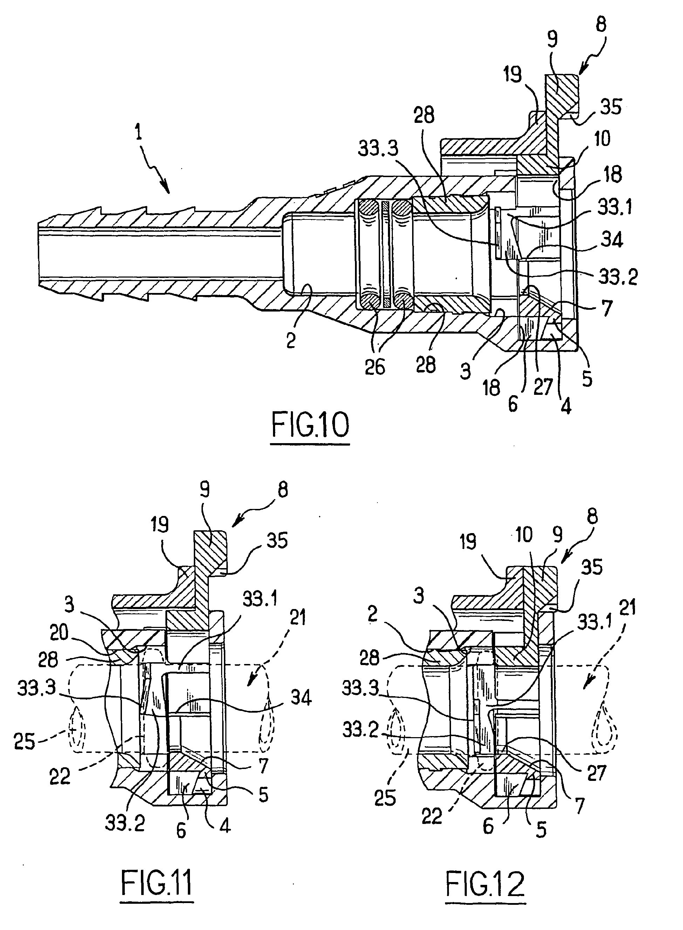

Ainsi, comme illustré sur les figures 9 à 12, l'organe de blocage comprend deux jambes 33 élastiques qui sont solidaires du témoin de verrouillage 8 par une portion d'extrémité 33.1 et comprend une portion d'extrémité 33.2 libre qui s'étend en partie en regard d'une surface de butée 34 de la bague 5 lorsque l'organe de blocage est en position de blocage. Chaque jambe 33 s'étend selon une direction parallèle à la direction de coulissement du témoin de verrouillage 8 et a sa portion d'extrémité libre 33.2 pourvue d'une ailette de contact 33.3 avec la collerette 33 pour la portion d'extrémité libre 33.2 puisse être enfoncée dans la deuxième section 3 par la collerette 22 et échapper ainsi à la surface de butée 34 de la bague 5. Le témoin de verrouillage 8 peut alors être amené dans sa deuxième position témoin.

La partie de manoeuvre 9 comporte une ouverture 35 d'introduction d'un outil de manoeuvre (tournevis par exemple) et accessible lorsque le témoin de verrouillage 8 est dans la seconde position témoin de manière à permettre de ramener le témoin de verrouillage 8 dans sa première position témoin.

Le fonctionnement du connecteur rapide selon le deuxième mode de réalisation est identique à celui du connecteur rapide selon le premier mode de réalisation.

L'invention n'est pas limitée aux modes particuliers de réalisation qui viennent d'être décrits, mais bien au contraire entend couvrir toute variante qui entre dans le cadre de l'invention tel que défini par les revendications.

Les pattes 13 et 33 peuvent être déplacées dans leur position de déblocage (par exemple par le jeu d'une articulation) au lieu d'être déformées.

L'invention peut être réalisée par combinaison et/ou inversion cinématique des modes de réalisation décrits.

Les moyens d'immobilisation du témoin de verrouillage dans la bague peuvent être des moyens frangibles et/ou des moyens d'encliquetage.

Les formes de la bague et du témoin peuvent être différentes de celles décrites. En particulier, la portion externe 19 et de la partie de manoeuvre 9 peuvent avoir toute forme permettant de déceler visuellement une variation de position de l'une par rapport à l'autre.

## Revendications

1. Connecteur rapide comprenant une pièce femelle (1) avec un alésage étagé dont une première section (2) peut accueillir à étanchéité un embout (25) d'une pièce mâle (21), et dont une deuxième section (3) de plus grand diamètre peut accueillir une collerette (22) extérieure de la pièce mâle (21) au-delà d'un verrou constitué d'une bague (5) comportant un orifice de passage (28) de diamètre proche de celui de la collerette (22), la bague (5) étant montée dans un logement (4) ménagé dans la pièce femelle (1) au niveau de la deuxième section (3) pour coulisser radialement entre une première position excentrée, de verrouillage, et une position escamotée coaxiale avec l'alésage, le verrou comportant un témoin de verrouillage (8) monté à coulissement radial dans la bague (5) entre une première position témoin dans laquelle le témoin de verrouillage (8) n'entrave pas l'orifice de passage, et une seconde position témoin dans laquelle le témoin de verrouillage (8) entrave ledit orifice de passage, **caractérisé en ce que** le verrou comprend au moins un organe de blocage du témoin dans sa première position témoin, l'organe de blocage (13 ; 33) étant mobile entre une position de blocage du témoin et une position escamotée de déblocage et ayant une partie de contact (13.2 ; 33.2) s'étendant en saillie dans la deuxième section vers la première section pour coopérer avec la collerette de manière que la collerette amène l'organe de blocage de sa position de blocage vers sa position de déblocage lorsque la pièce mâle est introduite dans la partie femelle.

2. Connecteur rapide selon la revendication 1, **caractérisé en ce que** le témoin de verrouillage (8) et la bague (5) comportent des moyens d'immobilisation (11, 12) mutuelle lorsque le témoin de verrouillage se trouve dans chacune des positions témoin.

3. Connecteur rapide selon la revendication 2, dans lequel les moyens d'immobilisation sont des moyens de rappel élastique (11, 12) du témoin dans chacune de ses deux positions témoins de part et d'autre d'une position intermédiaire instable.

4. Connecteur rapide selon l'une des revendications précédentes, **caractérisé en ce que** le témoin de verrouillage (8) comporte une partie de manoeuvre (9) en saillie d'une portion extérieure (19) de la bague (5) lorsque le témoin de verrouillage (8) est dans la première position, et sensiblement escamoté par rapport à la portion extérieure (19) lorsque le témoin de verrouillage (8) est dans la seconde position.

5. Connecteur selon la revendication 4, **caractérisé en ce que** la partie de manoeuvre (9) comporte une ouverture (35) d'introduction d'un outil de manoeuvre et accessible lorsque le témoin de verrouillage (8) est dans la seconde position témoin.

6. Connecteur rapide selon l'une des revendications précédentes, **caractérisé en ce que** le témoin de verrouillage (8) comporte une partie active (10) s'étendant de la partie de manoeuvre (9) vers l'intérieur du logement (4) de la bague, cette partie active étant partiellement en regard de parois radiales de la partie femelle définissant le logement (4), au moins lorsque le témoin de verrouillage (8) est dans la seconde position témoin.

7. Connecteur rapide selon la revendication 1, dans lequel l'organe de blocage comprend un bras (13) élastique qui est solidaire de la bague (5) et s'étend au moins en partie sous le témoin de verrouillage (8) lorsque l'organe de blocage est en position de blocage et le témoin de verrouillage est dans sa première position témoin de manière à constituer une butée pour le témoin de verrouillage.

8. Connecteur rapide selon la revendication 7, dans lequel le bras (13) s'étend selon une direction sensiblement axiale de la bague et possède une portion d'extrémité libre (13.2) agencée pour être écartée de cet axe par la collerette (22) de la pièce mâle (21) escamotant la patte par rapport au témoin de verrouillage (8).

9. Connecteur rapide selon la revendication 1, dans lequel l'organe de blocage comprend une jambe (33) élastique qui est solidaire du témoin de verrouillage (8) et s'étend en partie en regard d'une surface de butée (34) de la bague (5) lorsque l'organe de blocage est en position de blocage.

10. Connecteur rapide selon la revendication 9, dans lequel la jambe (33) s'étend selon une direction parallèle à la direction de coulissement du témoin de verrouillage (8) et a une portion d'extrémité libre (33.2) agencée pour être enfoncée dans la deuxième section (3) par la collerette (22) et échapper ainsi à la surface de butée (34) de la bague (5).

## Claims

1. A quick connector comprising a female part (1) with a stepped bore having a first section (2) suitable for sealingly receiving an endpiece (25) of a male part (21), and a second portion (3) of larger diameter suitable for receiving an external collar (22) on the male part (21) beyond a latch that is constituted by a ring (5) having a through orifice (28) of diameter close to the diameter of the collar (22), the ring (5) being mounted in a housing (4) formed in the female part (1) at the second section (3) so as to slide radially between an eccentric first position for latching, and a retracted position coaxial with the bore, the latch including a latching indicator (8) mounted to slide radially in the ring (5) between a first indication position in which the latching indicator (8) does not obstruct the through orifice, and a second indication position in which the latching indicator (8) obstructs said through orifice, the connector being **characterized in that** the latch includes at least one blocking member for blocking the indicator in its first indication position, the blocking member (13; 33) being movable between an indicator-blocking position and a retracted release position, and having a contact portion (13.2; 33.2) projecting into the second section towards the first section to co-operate with the collar in such a manner that the collar takes the blocking member from its blocking position towards its release position when the male part is inserted in the female part.

2. A quick connector according to claim 1, **characterized in that** the latching indicator (8) and the ring (5) include holder means (11, 12) for preventing them from moving relative to each other when the latching indicator is in either of its indication positions.

3. A quick connector according to claim 2, wherein the holder means are resilient return means (11, 12) for returning the indicator towards either of its two indication positions on either side of an unstable intermediate position.

4. A quick connector according to any preceding claim, **characterized in that** the latching indicator (8) has a drive portion (9) projecting from an outside portion (19) of the ring (5) when the latching indicator (8) is in the first position, and substantially retracted relative to the outside portion (19) when the latching indicator (8) is in the second position.

5. A connector according to claim 4, **characterized in that** the drive portion (9) includes an opening (35) for inserting a driver tool, which opening is accessible when the latching indicator (8) is in the second indication position.

6. A quick connector according to any preceding claim, **characterized in that** the latching indicator (8) has an active portion (10) extending from the drive portion (9) towards the inside of the housing (4) of the ring, said active portion facing in part radial walls of the female part defining the housing (4), at least when the latching indicator (8) is in the second indication position.

7. A quick connector according to claim 1, wherein the blocking member has a resilient arm (13) that is secured to the ring (5) and that extends at least in part under the latching indicator (8) when the blocking member is in the blocking position and the latching indicator is in its first indication position, so as to constitute an abutment for the latching indicator.

8. A quick connector according to claim 7, wherein the arm (13) extends in a substantially axial direction of the ring and possesses a free end (13.2) arranged to be moved away from said axis by the collar (22) of the male part (21), thereby retracting the arm relative to the latching indicator (8).

9. A quick connector according to claim 1, wherein the blocking member comprises a resilient leg (33) that is secured to the latching indicator (8) and that extends in part in register with an abutment surface (34) of the ring (5) when the blocking member is in the blocking position.

10. A quick connector according to claim 9, wherein the leg (33) extends in a direction parallel to the sliding direction of the latching indicator (8) and has a free end portion (33.2) arranged to be pushed into the second section (3) by the collar (22), thereby escaping from the abutment surface (34) of the ring (5).

## Patentansprüche

1. Schnellverbinder, umfassend ein weibliches Teil (1) mit einer gestuften Bohrung, von der ein erster Abschnitt (2) auf dichte Weise ein Anschlussstück (25) eines männlichen Teils (21) aufnehmen kann und von der ein zweiter Abschnitt (3) mit größerem Durchmesser einen äußeren Bund (22) des männlichen Teils (21) jenseits eines Riegels aufnehmen kann, der aus einem Ring (5) gebildet ist, der eine Durchtrittsöffnung (28) mit einem Durchmesser nahe dem des Bundes (22) hat, wobei der Ring (5) in einer in dem weiblichen Teil (1) im Bereich des zweiten Abschnitts (3) ausgebildeten Aufnahme (4) angeordnet ist, um sich zwischen einer außermittigen ersten Verriegelungsstellung und einer mit der Bohrung koaxialen eingerückten Stellung radial zu verschieben, wobei der Riegel einen Verriegelungsanzeiger (8) umfasst, der in dem Ring (5) zwischen einer ersten Anzeigerstellung, in der der Verriegelungsanzeiger (8) die Durchtrittsöffnung nicht behindert, und einer zweiten Anzeigerstellung radial verschiebbar gelagert ist, in der der Verriegelungsanzeiger (8) die genannte Durchtrittsöffnung behindert, **dadurch gekennzeichnet, dass** der Riegel mindestens ein Blockierelement zum Blockieren des Anzeigers in seiner ersten Anzeigerstellung umfasst, wobei das Blockierelement (13; 33) zwischen einer Blockierstellung zum Blockieren des Anzeigers und einer ausgerückten Freigabestellung beweglich ist und einen Kontaktabschnitt (13.2; 33.2) hat, der sich in dem zweiten Abschnitt vorspringend in Richtung des ersten Abschnitts erstreckt, um mit dem Bund derart zusammenzuwirken, dass der Bund das Blockierelement von seiner Blockierstellung in seine Freigabestellung mitnimmt, wenn das männliche Teil in das weibliche Teil eingefügt wird.

2. Schnellverbinder nach Anspruch 1, **dadurch gekennzeichnet, dass** der Verriegelungsanzeiger (8) und der Ring (5) Mittel (11, 12) für eine gegenseitige Blockierung umfassen, wenn sich der Verriegelungsanzeiger in der jeweiligen Anzeigerstellung befindet.

3. Schnellverbinder nach Anspruch 2, wobei die Blockierungsmittel elastische Rückstellmittel (11, 12) zum elastischen Rückstellen des Anzeigers in jede seiner beiden Anzeigerstellungen zu beiden Seiten einer instabilen Zwischenstellung sind.

4. Schnellverbinder nach einem der vorhergehenden Ansprüche, **dadurch gekennzeichnet, dass** der Verriegelungsanzeiger (8) einen Betätigungsabschnitt (9) umfasst, der von einem äußeren Abschnitt (19) des Rings (5) absteht, wenn der Verriegelungsanzeiger (8) in der ersten Stellung ist, und im Wesentlichen gegenüber dem äußeren Abschnitt (19) ausgerückt ist, wenn der Verriegelungsanzeiger (8) in der zweiten Stellung ist.

5. Schnellverbinder nach Anspruch 4, **dadurch gekennzeichnet, dass** der Betätigungsabschnitt (9) eine Öffnung (35) zum Einführen eines Betätigungswerkzeugs hat, die zugänglich ist, wenn der Verriegelungsanzeiger (8) ist der zweiten Anzeigerstellung ist.

6. Schnellverbinder nach einem der vorhergehenden Ansprüche, **dadurch gekennzeichnet, dass** der Verriegelungsanzeiger (8) einen aktiven Abschnitt (10) umfasst, der sich vom Betätigungsabschnitt (9) ins Innere der Aufnahme (4) des Rings erstreckt, wobei sich dieser aktive Abschnitt teilweise gegenüber die Aufnahme (4) definierenden, radialen Wänden des weiblichen Teils befindet, zumindest wenn der Verriegelungsanzeiger (8) in der zweiten Anzeigerstellung ist.

7. Schnellverbinder nach Anspruch 1, wobei das Blockierelement einen elastischen Arm (13) umfasst, der fest mit dem Ring (5) verbunden ist und sich zumindest teilweise unter dem Verriegelungsanzeiger (8) erstreckt, wenn das Blockierelement in der Blockierstellung und der Verriegelungsanzeiger in seiner ersten Anzeigerstellung ist, derart, dass er einen Anschlag für den Verriegelungsanzeiger bildet.

8. Schnellverbinder nach Anspruch 7, wobei sich der Arm (13) in einer im Wesentlichen axialen Richtung des Rings erstreckt und einen freien Endabschnitt (13.2) hat, der so ausgebildet ist, dass er von dieser Achse durch den Bund (22) des männlichen Teils (21) entfernt wird, der die Lasche gegenüber dem Verriegelungsanzeiger (8) ausrückt.

9. Schnellverbinder nach Anspruch 1, wobei das Blockierelement einen elastischen Schenkel (33) umfasst, der fest mit dem Verriegelungsanzeiger (8) verbunden ist und sich zum Teil gegenüber einer Anschlagfläche (34) des Rings (5) erstreckt, wenn das Blockierelement in der Blockierstellung ist.

10. Schnellverbinder nach Anspruch 9, wobei sich der Schenkel (33) in einer zur Verschiebungsrichtung des Verriegelungsanzeigers (8) parallelen Richtung erstreckt und einen freien Endabschnitt (33.2) hat, der so ausgebildet ist, dass er von dem Bund (22) in den zweiten Abschnitt (3) gedrückt wird und so von der Anschlagfläche (34) des Ringes freikommt.
